# FASCICULE DE BREVET EUROPEEN

(11) **EP 1 741 092 B1**
(45) Date de publication et mention de la délivrance du brevet: **11.06.2008**
(21) Numéro de dépôt: 04742550.9
(22) Date de dépôt: 20.04.2004
(51) Int. Cl.: G10L 15/14, G10L 15/06

(54) **RECONNAISSANCE VOCALE PAR MODELISATION CONTEXTUELLE D'UNITES VOCALES**
SPRACHERKENNUNG DURCH KONTEXTUELLE MODELLIERUNG DER SPRACHEINHEITEN
VOICE RECOGNITION BASED ON THE CONTEXTUAL MODELLING OF VOICE UNITS

(43) Date de publication de la demande: 10.01.2007
(73) Titulaire: France Télécom, 75015 Paris (FR)
(72) Inventeur: MESSINA, Ronaldo, F-22300 Lannion (FR); JOUVET, Denis, F-22300 LANNION (FR)
(74) Mandataire: Cabinet Plasseraud
(86) Numéro de dépôt international: PCT/FR2004/000972
(87) Numéro de publication internationale: WO 2005/112000

(56) Documents cités:
- EP-A- 0 805 434
- US-A- 5 677 988
- US-A- 5 806 030

## Description

L'invention a trait à la reconnaissance de la parole dans un signal audio, par exemple un signal audio prononcé par un locuteur.

Plus particulièrement, l'invention concerne un procédé et un système automatique de reconnaissance vocale basés sur l'utilisation de modèles acoustiques des signaux vocaux, selon lesquels la parole est modélisée sous la forme d'une ou plusieurs successions d'unités vocales correspondant chacune à un ou plusieurs phonèmes.

Une application particulièrement intéressante d'un tel procédé et d'un tel système concerne la reconnaissance automatique de la parole pour la dictée vocale ou dans le cadre de services vocaux interactifs liés à la téléphonie.

Différents types de modélisation peuvent être utilisés dans le cadre de la reconnaissance de la parole. On pourra, à cet égard, se référer à l'article de Lawrence R. Rabiner intitulé « A Tutorial on Hidden Markov Models and Selected Applications in Speech Recognition », Proceedings of the IEEE, volume 77, n°2, février 1989. Cet article décrit l'utilisation de modèles de Markov cachés pour modéliser des signaux vocaux. Selon une telle modélisation, une unité vocale, par exemple un phonème ou un mot, est représentée sous la forme d'une séquence d'états associés chacun à une densité de probabilité modélisant une forme spectrale que l'on doit observer sur cet état et qui résulte d'une analyse acoustique. Une variante possible de mise en oeuvre des modèles de Markov consiste à associer les densités de probabilité aux transitions entre états. Cette modélisation est alors utilisée pour reconnaître un segment de parole énoncé par comparaison avec des modèles disponibles associés à des unités connues par le système de reconnaissance vocale et obtenues par apprentissage préalable.

La modélisation d'une unité vocale est cependant fortement liée au contexte dans lequel se situe une unité vocale. En effet, un phonème peut être prononcé de manières différentes en fonction des phonèmes qui l'entourent.

Ainsi, par exemple, les mots de la langue française « étroit » et « zéro », qui peuvent être représentés phonétiquement de la manière suivante :
« ei t r w a » ;
   et
« z ei r au »,
contiennent un phonème « r » dont la sonorité est différente en raison de la sonorité des phonèmes qui l'entourent.

Dans le but de tenir compte de l'influence du contexte dans lequel se situe un phonème, les unités vocales sont généralement modélisées sous la forme de triphones qui tiennent compte du contexte dans lequel elles se situent, c'est-à-dire en fonction de l'unité vocale précédente et de l'unité vocale suivante. Ainsi, en considérant les mots « étroit » et « zéro », ces mots peuvent être retranscrits au moyen des triphones suivants :

| | | | | | |
|---|---|---|---|---|---|
| étroit : | &[ei]t | ei[t]r | t[r]w | r[w]a | w[a]& |
| zéro : | &[z]ei | z[ei]r | ei[r]au | r[au]& | |

Selon cette représentation, le signe « & » est utilisé pour marquer les limites d'un mot. Par exemple, le triphone ei[t]r désigne une unité modélisant le phonème « t » lorsque celui-ci apparaît après le phonème « ei » et avant le phonème « r ».

Une autre approche tenant compte du contexte d'un phonème peut consister à utiliser des modèles vocaux dont les unités vocales correspondent à un ensemble de phonèmes, par exemple une syllabe. Selon cette approche, les mots « étroit » et « zéro » peuvent être représentés, en utilisant une unité vocale correspondant à une syllabe, de la manière suivante :
étroit : ei t|r|w|a
zéro : z|ei r|au

Comme on le conçoit, de telles approches nécessitent de disposer d'un grand nombre de modèles pour la reconnaissance de mots ou de phrases.

Le nombre d'unités, tenant compte des influences contextuelles, dépend beaucoup de la longueur du contexte considéré. Si on limite le contexte à l'unité qui précède et à celle qui suit, le nombre d'unités contextuelles possible est alors égal au nombre d'unités hors contexte au cube. Dans le cas des phonèmes (36 en français), cela donne 36³. Dans le cas des syllabes, on aboutit à N x N x N, avec N de l'ordre de quelques milliers. Dans ce cas, le nombre d'unités vocales possibles croît de manière rédhibitoire et nécessite dès lors des ressources très importantes en termes de mémoire et de capacité de calcul pour mettre en oeuvre un procédé de reconnaissance vocale fiable.

En outre, on ne dispose pas d'une quantité suffisante de données d'apprentissage pour estimer correctement un tel nombre de paramètres.

Dans le même domaine, le document EP 0 805 434 décrit un système complexe de modélisation à partir de combinaisons de modèles dépendants et indépendants au contexte. Ce système n'est toutefois pas entièrement satisfaisant.

Le but de l'invention est de pallier les inconvénients précités et de fournir un procédé et un système de reconnaissance de la parole permettant de limiter de manière considérable le nombre de paramètres nécessaires pour la modélisation d'unités vocales longues, c'est-à-dire correspondant à une syllabe ou à une suite de phonèmes.

L'invention a donc pour objet un procédé selon la revendication 1.

Selon une caractéristique générale de ce procédé, au cours de l'élaboration des modèles acoustiques, on modélise une ou plusieurs unités vocales au moyen d'une première partie des états indépendante d'unités vocales voisines et au moyen d'une deuxième partie des états dépendante d'unités vocales voisines, la deuxième partie d'états dépendante des unités vocales voisines partageant des paramètres communs avec plusieurs unités partageant des mêmes phonèmes.

Selon une autre caractéristique de ce procédé, la première partie d'états indépendante des unités voisines correspond à des états médians de l'unité vocale et la deuxième partie d'états dépendante des unités vocales voisines correspond à des états de début et de fin de l'unité vocale.

Les parties indépendantes des unités vocales voisines peuvent être spécifiques à un unique modèle.

Dans un mode de mise en oeuvre, les états sont associés chacun à une densité de probabilité d'observation. On peut également prévoir d'associer les densités de probabilité d'observation à des transitions entre états. Les paramètres communs sont alors les densités de probabilité.

Il est également possible de prévoir que la deuxième partie d'états dépendante des unités vocales voisines comporte en outre au moins un état de transition servant au raccordement des états indépendants des unités vocales voisines et qui est dépourvu de densité de probabilité.

En outre, on peut prévoir que les états indépendants d'unités vocales voisines soient associés à des transitions aptes à provoquer des sauts d'états consécutifs.

Par exemple, les modèles acoustiques sont des modèles de Markov cachés.

L'invention a également pour objet un système de reconnaissance vocale, selon la revendication 8.

Les modèles acoustiques d'une ou plusieurs unités vocales comportent une première partie d'états indépendante d'unités vocales voisines et une deuxième partie d'états dépendante d'unités vocales voisines, la deuxième partie d'états dépendante des unités vocales voisines partageant des paramètres communs avec plusieurs unités partageant des mêmes phonèmes.

D'autres buts, caractéristiques et avantages de l'invention apparaîtront à la lecture de la description suivante, donnée uniquement à titre d'exemple non-limitatif, et faite en référence aux dessins annexés sur lesquels :
- la figure 1 est un schéma synoptique illustrant la structure générale d'un système de reconnaissance vocale conforme à l'invention ;
- la figure 2 est un schéma illustrant un exemple de modélisation d'un signal vocal ;
- la figure 3 illustre une variante de modélisation d'un signal vocal ; et
- la figure 4 illustre une autre variante de modélisation d'un signal vocal.

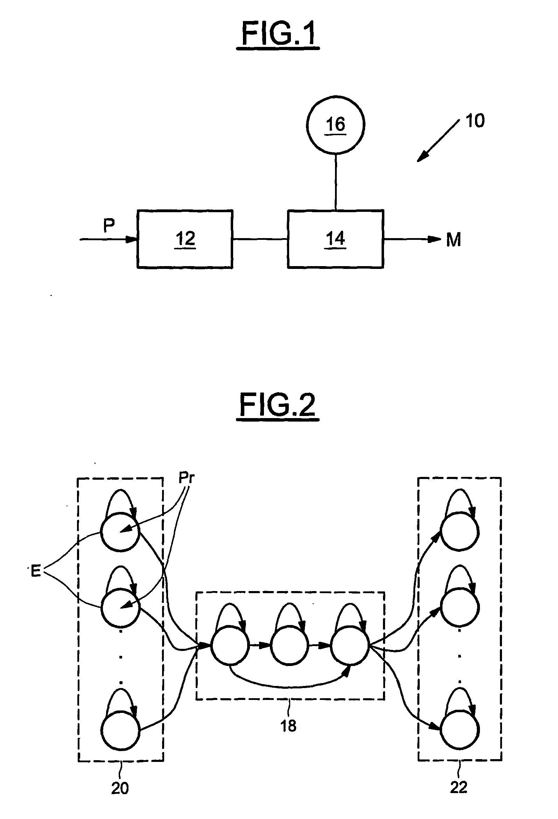

Sur la figure 1, on a représenté de manière très schématique la structure générale d'un système de reconnaissance de la parole conforme à l'invention, désigné par la référence numérique générale 10.

Ce système 10 est destiné à analyser un signal vocal P de manière à élaborer une suite de vecteurs d'observation, qui sont ensuite traités pour procéder à une reconnaissance de mots M, dont les modèles sont connus, contenus dans le signal P. Les modèles sont construits à partir de suites de vecteurs d'observation de manière à caractériser les unités vocales, à savoir mots, phonèmes ou suites de phonèmes, auxquels ils sont associés.

Dans la suite de la description, on considèrera que la modélisation consiste à élaborer des modèles de Markov cachés. On notera néanmoins que l'invention s'applique également à tout autre type de modélisation appropriée pour l'utilisation envisagée.

L'élaboration de modèles de Markov cachés est une technique connue à la portée d'un homme du métier, elle ne sera donc pas décrite en détail par la suite. On peut à cet effet se rapporter au document précité «A Tutorial on Hidden Markov Models and Selected Applications in Speech Recognition » de Lawrence R. Rabiner, Proceedings of the IEEE, volume 77, n°2, février 1989 incorporé à titre de référence, qui décrit en détail cette technique.

On notera néanmoins que les modèles de Markov cachés constituent des modèles stochastiques développés de manière à décrire des processus qui évoluent en fonction du temps, et qui peuvent se trouver dans un ensemble fini d'états, non directement observables, chaque état émetteur étant associé à une densité de probabilité qui modélise les formes spectrales que l'on observe sur le signal et qui résultent de l'analyse acoustique du signal. Dans des variantes de mise en oeuvre, ces densités de probabilité d'observation peuvent être associées à des transitions entre états. Cependant, dans le cadre de la présente description, on entend, par état, aussi bien l'état proprement dit que la densité de probabilité qui lui est associée, la transposition de l'enseignement de la présente demande de brevet à un mode de mise en oeuvre dans lequel les densités de probabilité sont associées à des transitions entre états étant à la portée d'un homme du métier.

Comme on le voit sur la figure 1, le système de reconnaissance de la parole comporte un premier étage 12 servant à analyser le signal vocal P de manière à élaborer une suite de vecteurs d'observation.

Il procède à une analyse spectrale ou temporelle du signal P, par exemple au moyen d'une fenêtre glissante puis procède à une élaboration des vecteurs d'observation par extraction de coefficients pertinents. Par exemple, de tels coefficients sont des coefficients cepstraux, encore appelés coefficients MFCC (« Mel Frequency Cepstrum Coefficients »).

Lors de la phase de construction des modèles, les vecteurs ainsi élaborés sont utilisés pour bâtir un modèle pour chaque unité (mot, phonème ou suite de phonèmes).

Comme cela est connu en soi, un modèle HMM est caractérisé par un ensemble de paramètres, à savoir le nombre d'états du modèle, les probabilités de transition entre états, ainsi que les densités de probabilité d'émission des vecteurs d'observation.

Après modélisation d'un mot, un deuxième module 14 procède à une analyse de correspondance avec un ensemble de modèles obtenus par apprentissage préalable et extraits d'une base de données 16 de manière à identifier le ou les mots candidats.

Comme indiqué précédemment, cette analyse de correspondance s'effectue sur la base d'unités acoustiques modélisées chacune par un modèle HMM.

On a représenté sur la figure 2 une topologie possible d'un modèle de phonème.

Conformément à une caractéristique de l'invention, ce modèle de phonème est adapté pour tenir compte du contexte dans lequel se situe le phonème, c'est-à-dire le ou les phonèmes ou les classes de phonèmes précédant et suivant. Comme on le voit sur cette figure 2, et comme indiqué précédemment, cette modélisation est basée sur l'élaboration d'un ensemble d'états descriptifs tels que E associé chacun à une densité de probabilité Pr d'observation. Pour procéder à cette modélisation, on définit un ensemble d'états internes 18 indépendants du contexte du ou des phonèmes considérés et des états externes 20 et 22 dépendants d'une unité vocale voisine. On notera cependant que les états internes 18 peuvent également être rendus dépendants du contexte afin d'augmenter la précision du modèle.

Les modèles des mots ou des expressions à reconnaître sont obtenus par concaténation des modèles des unités (phonèmes ou suite de phonèmes) et en les raccordant en fonction du contexte, par sélection des états (E) pertinents. Ainsi, les paramètres des états externes 20 et 22 tiennent compte de l'influence contextuelle de chaque phonème. En ce qui concerne les états internes 18, les premiers et derniers états ont une dépendance vis-à-vis du contexte moindre en raison du fait que leurs paramètres sont estimés en utilisant des données de toutes les versions dépendantes du contexte de chaque phonème.

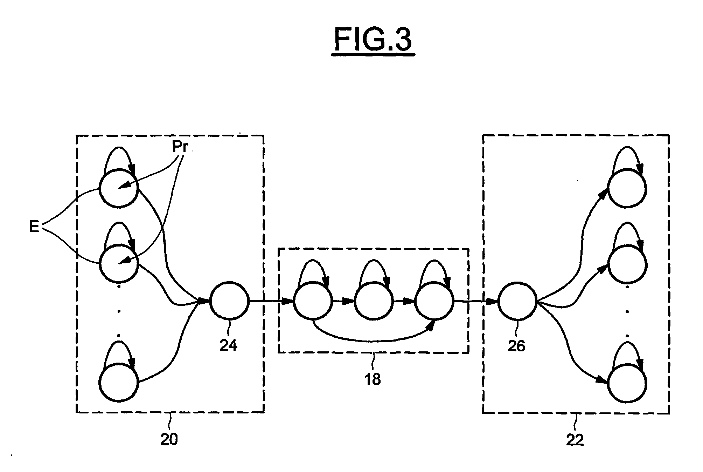

Comme on l'a représenté sur la figure 3, sur laquelle des éléments identiques à ceux de la figure 2 sont représentés par des mêmes références numériques, il est également possible d'ajouter entre les états externes 20 et 22, d'une part, et les états internes 18, des états inertes ou non-émetteurs 24 et 26 servant essentiellement à raccorder les états externes 20 et 22 aux états internes 18, en particulier lorsque l'on modélise des unités vocales longues, mais également lors de la modélisation des phonèmes.

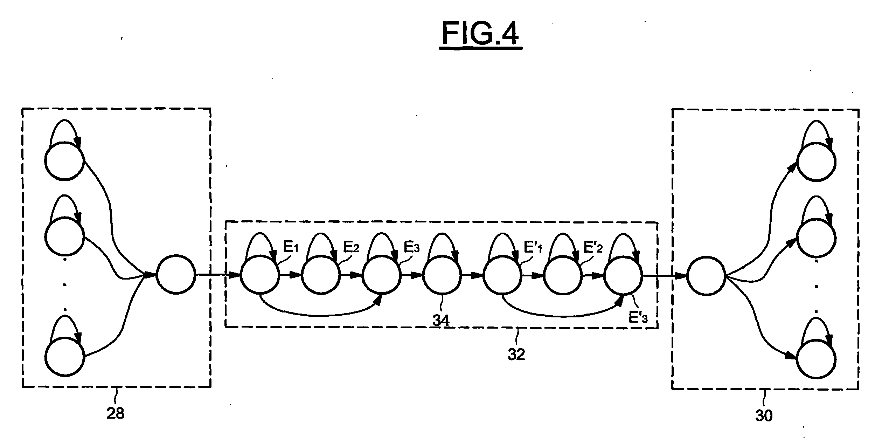

On a représenté sur la figure 4 une autre modélisation utilisée pour modéliser des unités vocales longues. Sur cette figure, les états externes 28 et 30 correspondent aux états externes 20 et 22 de la figure 3. Les états centraux 32 comportent, dans cet exemple, trois états par phonème E1, E2, E3 et E'1, E'2 et E'3, pour les phonèmes « k » et « e » respectivement, séparés d'un état de raccordement 34, chacun de ces états étant associé à une densité de probabilité d'observation. On notera que l'état de raccordement 34 pourrait être partagé par toutes les unités vocales dans lesquelles un « k » est associé à un « e ».

La modélisation illustrée sur la figure 4 peut être utilisée pour modéliser l'unité vocale « kle ». En principe, cette unité vocale est divisée en trois parties, à savoir une partie gauche, une partie centrale et une partie droite notées respectivement :
« k.g » « kle.c » et « e.d »
qui correspondent respectivement aux états 28, 32 et 30. On notera que d'autres découpages peuvent également être envisagés.

Les états 28 et 30 constituent autant d'entrées et de sorties qu'il existe de contextes gauche et droit, respectivement, pour l'unité vocale considérée. En d'autres termes, le nombre d'états 20 et 22 est déterminé en fonction des contextes gauche et droite, respectivement, pour les phonèmes k et e. On notera que les états contextuels pertinents sont sélectionnés lors de la concaténation des modèles des unités vocales pour fabriquer les modèles des mots ou des expressions.

Dans les différents modes de réalisation envisagés, toutes les unités vocales qui ont un même premier phonème partagent un même modèle 20, 28 de gauche, dépendant du contexte ou bien partagent seulement quelques paramètres communs, en particulier des densités d'observation. Ainsi, par exemple, l'unité vocale longue « kle » et le phonème « k » partagent le même modèle « k.g », de même que toute autre unité vocale qui commence par un « k ». Tel est également le cas en ce qui concerne le dernier phonème. Toutes les unités vocales ayant le même dernier phonème partagent le même modèle de droite dépendant du contexte, ici « e.d ». Les paramètres de ces modèles contextuels sont ainsi partagés entre un nombre important d'unités, et donc estimés à partir d'un nombre important de données. Seule la partie centrale 18, 32 n'est spécifique qu'à une unité vocale. Il est toutefois possible de rendre cette partie centrale 18, 32 dépendante du contexte, dans une certaine mesure, en prévoyant des trajets spécifiques de changement d'états au sein de ses états centraux tendant à sauter un ou plusieurs états et ce, en fonction du contexte.

Comme on le conçoit, grâce à l'invention selon laquelle on partage des paramètres contextuels entre unités acoustiques longues (phonèmes, syllabes ou suites quelconques de phonèmes), on réduit considérablement le nombre de paramètres nécessaires pour procéder à une reconnaissance de la parole avec des unités acoustiques longues.

## Revendications

1. Procédé d'élaboration de modèles acoustiques stochastiques d'unités vocales comprenant la modélisation sous la forme d'ensemble d'états (E) d'au moins une unité vocale au moyen d'une première partie d'états (18 ; 32) et d'au moins une seconde partie (20, 22 ; 28, 30) d'états **caractérisé en ce que** ladite première partie d'états correspond à des états médians de l'unité vocale et comprend des états déterminés en fonction de l'ensemble de l'unité vocale et **en ce que** ladite seconde partie d'états correspond à des états de début et de fin de l'unité vocale et comprend des états déterminés en fonction d'unités vocales voisines et qui partagent des paramètres communs avec plusieurs unités partageant des mêmes fractions d'unité vocale.

2. Procédé selon la revendication 1, dans lequel des états de ladite première partie sont également déterminés en fonction des unités vocales voisines.

3. Procédé selon la revendication 1, dans lequel des états de ladite première partie sont indépendants d'unités vocales voisines et sont associés à des transitions aptes à provoquer des sauts d'états consécutifs.

4. Procédé selon la revendication 1, dans lequel ladite première partie est spécifique à une unique unité vocale.

5. Procédé selon la revendication 1, dans lequel lesdits paramètres communs sont des densités de probabilité.

6. Procédé selon la revendication 1, dans lequel les états desdites première et seconde parties sont liés par au moins un état de transition (24, 26) qui ne comporte pas de paramètre de densité de probabilité.

7. Procédé de reconnaissance de la parole dans un signal acoustique comprenant une étape d'élaboration de modèles acoustiques stochastiques d'unités vocales et une étape d'utilisation des modèles acoustiques pour reconnaître le signal, dans lequel ladite étape d'élaboration de modèles acoustiques est un procédé selon l'une quelconque des revendications 1 à 6.

8. Système de reconnaissance vocale, comprenant des moyens (12) d'analyse de signaux vocaux pour élaborer une séquence de vecteurs d'observation, des moyens (12) pour élaborer un modèle acoustique de chaque signal sous la forme d'un ensemble d'états (E) du signal, et des moyens (14) de comparaison du signal acoustique avec des modèles acoustiques prédéterminés d'unités vocales obtenus par apprentissage préalable et stockés dans une base de données, **caractérisé en ce que** le modèle acoustique d'au moins une unité vocale comporte une première partie d'états (18 ; 32) correspondants à des états médians de l'unité vocale, ces états étant déterminés en fonction de l'ensemble de l'unité vocale et au moins une seconde partie (20, 22 ; 28, 30) d'états correspondant à des états de début et de fin de l'unité vocale, ces états étant déterminés en fonction d'unités vocales voisines et partageant des paramètres communs avec plusieurs unités partageant des mêmes fractions d'unité vocale.

## Claims

1. Method of generating stochastic acoustic models of voice units comprising the modelling in the form of a set of states (E) of at least one voice unit by means of a first portion of states (18; 32) and at least one second portion (20, 22; 28, 30) of states, **characterized in that** said first portion of states corresponds to median states of the voice unit and comprises states determined recording to the whole of the voice unit and **in that** said second portion of states corresponds to start and end states of the voice unit and comprises states determined according to adjacent voice units that share common parameters with several units sharing the same voice unit fractions.

2. Method according to Claim 1, in which states of said first portion are also determined according to the adjacent voice units.

3. Method according to Claim 1, in which states of said first portion are independent of adjacent voice units and are associated with transitions that can provoke consecutive state jumps.

4. Method according to Claim 1, in which said first portion is specific to a single voice unit.

5. Method according to Claim 1, in which said common parameters are probability densities.

6. Method according to Claim 1, in which the states of said first and second portions are linked by at least one transition state (24, 26) which comprises no probability density parameter.

7. Method of recognizing speech in an acoustic signal comprising a step for generating stochastic acoustic models of voice units and a step for using the acoustic models to recognize the signal, in which said acoustic model generation step is a method according to any one of Claims 1 to 6.

8. Voice recognition system, comprising means (12) of analysing voice signals to generate a sequence of observation vectors, means (12) for generating an acoustic model of each signal in the form of a set of states (E) of the signal, and means (14) for comparing the acoustic signal with predetermined acoustic models of voice units obtained by prior learning and stored in a database, **characterized in that** the acoustic model of at least one voice unit comprises a first portion of states (18; 32) corresponding to median states of the voice unit, these states being determined according to the whole of the voice unit and at least one second portion (20, 22; 28, 30) of states corresponding to start and end states of the voice unit, these states being determined according to adjacent voice units and sharing common parameters with several units sharing the same voice unit fractions.

## Patentansprüche

1. Verfahren zur Erarbeitung von stochastischen akustischen Modellen von Spracheinheiten, das die Modellisierung in Form einer Gruppe von Zuständen (E) mindestens einer Spracheinheit mittels eines ersten Teils von Zustände (18; 32) und mindestens eines zweiten Teils (20, 22; 28, 30) von Zuständen aufweist, **dadurch gekennzeichnet, dass** der erste Teil von Zuständen mittleren Zuständen der Spracheinheit, entspricht und Zustände aufweist, die in Abhängigkeit von der Gruppe der Spracheinheit bestimmt werden, und dass der zweite Teil von Zustände Zuständen am Anfang und am Ende der Spracheinheit, entspricht und Zustände aufweist, die in Abhängigkeit von benachbarten Spracheinheiten bestimmt werden und die sich gemeinsame Parameter mit mehreren Einheiten teilen, die sich die gleichen Bruchteile einer Spracheinheit teilen.

2. Verfahren nach Anspruch 1, bei dem die Zustände des ersten Teils ebenfalls in Abhängigkeit von den benachbarten Spracheinheiten bestimmt werden.

3. Verfahren nach Anspruch 1, bei dem die Zustände des ersten Teils unabhängig von benachbarten Spracheinheiten sind und Übergängen zugeordnet sind, die in der Lage sind, aufeinander folgende Zustandssprünge zu bewirken.

4. Verfahren nach Anspruch 1, bei dem der erste Teil für eine einzige Spracheinheit, spezifisch ist.

5. Verfahren nach Anspruch 1, bei dem die gemeinsamen Parameter Wahrscheinlichkeitsdichten sind.

6. Verfahren nach Anspruch 1, bei dem die Zustände des ersten und des zweiten Teils über mindestens einen Übergangszustand (24, 26) verbunden sind, der keine Parameter der Wahrscheinlichkeitsdichte aufweist.

7. Verfahren zur Spracherkennung in einem akustischen Signal, das einen Schritt der Erarbeitung von stochastischen akustischen Modellen von Spracheinheiten und einen Schritt der Benutzung der akustischen Modelle zur Erkennung des Signals aufweist, bei dem der Schritt der Erarbeitung von akustischen Modellen ein Verfahren nach einem der Ansprüche 1 bis 6 ist.

8. Spracherkennungssystem, das Mittel (12) zur Analyse von Sprachsignalen, um eine Folge von Beobachtungsvektoren zu erarbeiten, Mittel (12) zur Erarbeitung eines akustischen Modells jedes Signals in Form einer Gruppe von Zuständen (E) des Signals und Mittel (14) zum Vergleich des akustischen Signals mit vorbestimmten akustischen Modellen von Spracheinheiten aufweist, die durch vorheriges Lernen erhalten und in einer Datenbank gespeichert werden, **dadurch gekennzeichnet, dass** das akustische Modell mindestens einer Spracheinheit einen ersten Teil von Zuständen (18; 32), die mittleren Zuständen der Spracheinheit entsprechen, wobei diese Zustände in Abhängigkeit von der Gruppe der Spracheinheit bestimmt werden, und mindestens einen zweiten Teil (20, 22; 28, 30) von Zuständen aufweist, die Zuständen am Anfang und am Ende der Spracheinheit entsprechen, wobei diese Zustände in Abhängigkeit von benachbarten Spracheinheiten bestimmt werden und sich gemeinsame Parameter mit mehreren Einheiten teilen, die sich gleiche Bruchteile einer Spracheinheit teilen.
